# EUROPEAN PATENT APPLICATION

(11) **EP 1 296 402 A1**
(43) Date of publication of application: **26.03.2003**
(21) Application number: 01122923.4
(22) Date of filing: 25.09.2001
(51) Int. Cl.: H01M 10/50, H01M 8/04

(54) **Fuel cell system and method for operating the same**

(71) Applicant: Ballard Power Systems AG, 73230 Kirchheim / Teck-Nabern (DE)
(72) Inventor: Blaszczyk, Janusz, Richmond, BC Canada, V7C 5R8 (CA); Fleck, Wolfram, V3J 5V5 Coquitlam (CA)
(74) Representative: Beyer, Andreas, Dr.

(57) **Abstract**

The invention relates to a fuel cell system comprising a fuel cell exhibiting an anode with a fuel feed line to feed fuel to the anode and an anode exhaust line for removing anode exhaust from the anode and a cathode with an oxygen feed line to feed oxygen to the cathode and a cathode exhaust line to remove cathode exhaust from the cathode and a recirculation line for recirculating anode exhaust to the anode feed line, where the anode exhaust line is connected to a bleed line which allows less than 5% by volume of the anode exhaust to bleed continuously from the anode exhaust.

## Description

The invention relates to a fuel cell system and a method for operating the same in accordance with the preamble of the independent claims.

In fuel cell systems where hydrogen gas is used as fuel the anode exhaust of the fuel cell stack is recycled back to the fuel cell's anode to make use of the surplus hydrogen in the exhaust. To prevent accumulation of impurities contained in the hydrogen gas inside the anode compartments of the fuel cell stack, however, the hydrogen has to be purged from time to time. In DE 199 44 541 A1 such a fuel cell system is disclosed. Besides arising problems by interrupting the fuel cell operation, purging of hydrogen to the ambient is not acceptable, as discharging of raw fuel may be a problem to the environment. It has also been suggested to include a purifying unit in the recycling loop to avoid purging but whereas reactive impurities might be removed by appropriate catalytic reactions inert impurities can't be removed easily, however. If, as disclosed in another embodiment of DE 199 44 541 A1, the purged hydrogen is burned in a catalytic burner, the catalytic component is highly stressed by the frequent high load of hydrogen pulses.

The invention is based on the object of specifying a fuel cell system where impurities can be removed from the fuel cell system without purging.

This object is achieved in the case of a fuel cell system having the features of Claim 1 and in the case of a method having the features of Claim 6.

The invention allows for a continuous operation of the fuel cell system and avoids purging unused hydrogen to the environment.

Further advantages and refinements of the invention emerge from the rest of the claims and the description.

The invention is explained in more detail below with reference to a drawing, in which:
- Figure 1: shows a schematic sketch first embodiment of a preferred fuel cell system according to the invention and
- Figure 2: shows a second embodiment according to the invention.

The invention can be advantageously used in vehicles where a fuel cell system is used to supply electric energy for traction and/or low power requirements. The invention is highly favourable for hydrogen fuel cell systems. It can also be applied, however, to fuel cell systems with a gas production system where hydrogen is produced from a fuel, e.g. by a reforming process.

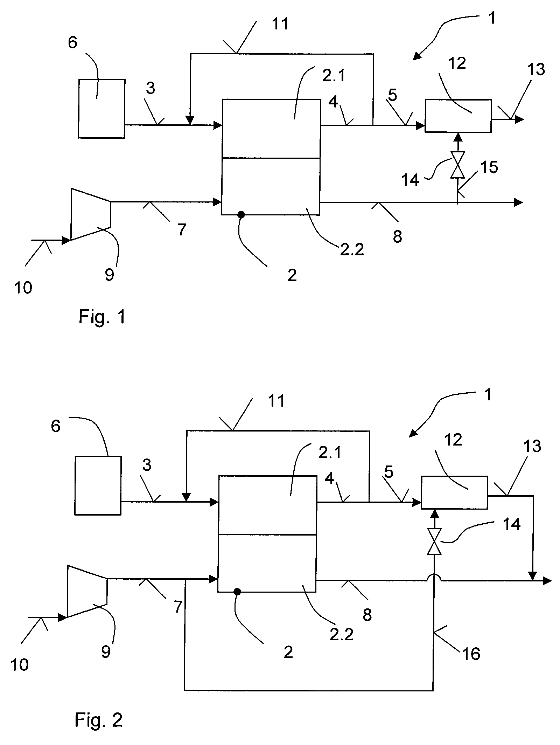

Fig. 1 shows a preferred embodiment of a fuel cell system according to the invention as a schematic drawing. The fuel cell system 1 comprises a fuel cell 2, preferably a fuel cell stack, where a multiplicity of single fuel cells are stacked together to be capable of producing a desired amount of electric power. The fuel cell 2 exhibits an anode 2.1 with an anode feed line 3 for feeding hydrogen to the fuel cell anode 2.1 and an anode exhaust line 4 to remove the exhaust from the anode 2.1 and a cathode 2.2 with a cathode feed line 7 for feeding oxygen to the fuel cell cathode 2.2 and a cathode exhaust line 8 to remove the exhaust from the cathode 2.2. The anode exhaust mainly carries away surplus hydrogen and water from the fuel cell 2.

The oxygen for the fuel cell cathode 2.2 is preferably from air which is fed to a compressor 9 by line 10 and compressed by said compressor 9 to an appropriate operating pressure.

The fuel cell system 1 is preferably a hydrogen system where hydrogen as a fuel is fed to the fuel cell stack 2 from a storage tank 6. The storage tank 6 can be a high pressure tank and/or a pump can be arranged between the tank 6 and the fuel cell 2 to establish the appropriate operating pressure of the hydrogen medium.

According to the invention most of the hydrogen in the anode exhaust is recycled in a line 11 from anode exhaust line 4 to anode feed line 3 and a small amount of the hydrogen in the anode exhaust is fed continuously to a bleed line 5. Advantageously less than 5%, preferably only 1 - 2%, of the hydrogen volume in the anode exhaust is fed to line 5. As there is a continuous amount of hydrogen continuously bleeding from the exhaust impurities in the anode exhaust cannot accumulate and dilute the hydrogen in the fuel cell 2 subsequently reducing the fuel cell efficiency.

Preferably line 5 is connected to a catalytic reactor 12 where the hydrogen which is bled at steady flow rate from the recirculation fuel loop 11 can be combined with oxygen from the cathode exhaust in said reactor 12. A suitable reactor 12 is a catalytic burner.

A steady air flow rate can be drained via line 15 from the cathode exhaust in line 8. Favourably a constant back-pressure valve 14 mounted in line 15 assures steady flow to maintain less than 50% of the hydrogen low inflammability limit in the reactor chamber, thus avoiding safety problems due to the hydrogen load in the reactor 12. The hot reaction gas which mainly consists of water steam and which is produced in the reactor 12 can be removed through exhaust line 13.

Fig. 2 shows another preferred embodiment according to the invention. Components which are the same as in Fig. 1 are referred to with the same reference numbers. The air for the catalytic reaction in reactor 12 can be drained from the area downstream the compressor 9 via line 16. If a compressor by-pass valve is installed to allow air to by-pass the compressor 9, air can be drained from downstream the by-pass valve through line 16 and fed into the reactor 12. It is advantageous to use the constant back-pressure valve 14 in line 16 to allow for a secure drain of oxygen into reactor 12 to maintain safe operation conditions in the reactor 12.

Additionally, the hot gas from the catalytic reactor 12 can be returned to the main exhaust line, e.g. the cathode exhaust line 8. The advantage is that formation of a steam cloud around the exhaust pipe 13 can be avoided, which might form when the water rich hot gas cools down while passing through line 13.

According to the invention no unused fuel is being expelled from the fuel cell exhaust system as opposed to the conventional purge system known in the art.

No fuel is being discharged into the environment which helps to protect the environment. As for the use of the preferred fuel cell system 1 in vehicles, an increased safety of vehicle operations arises, particularly in confined areas. Additionally, the acceptance of fuel cell vehicles can be increased through elimination or decrease the size of a optically visible steam cloud leaving the exhaust pipe 13.

## Claims

1. A fuel cell system (1) comprising a fuel cell (2) exhibiting an anode (2.1) with a fuel feed line (3) to feed fuel to the anode (2.1) and an anode exhaust line (4) for removing anode exhaust from the anode (2.1) and a cathode (2.2) with an oxygen feed line (7) to feed oxygen to the cathode (2.2) and a cathode exhaust line (8) to remove cathode exhaust from the cathode (2.2) and a recirculation line (11) for recirculating anode exhaust to the anode feed line (3),
**characterized in**
**that** the anode exhaust line (4) is connected to a bleed line (5) which allows less than 5% by volume of the anode exhaust to bleed continuously from the anode exhaust.

2. A fuel cell system according to Claim 1,
**characterized in that** said bleed line (5) is connected to a catalytic reactor (12).

3. A fuel cell system according to Claim 2,
**characterized in that** said catalytic reactor (12) is connected to the cathode exhaust line (8) for feeding oxygen into said reactor (12).

4. A fuel cell system according to Claim 3,
**characterized in that** a constant back-pressure valve (14) is installed upstream in the oxygen flow to said reactor (12).

5. A fuel cell system according to Claim 2,
**characterized in that** the exhaust of said reactor (12) is fed into the cathode exhaust line (8) via an exhaust line (13).

6. A method for operating a fuel cell system where a fuel is fed to an anode (2.1) of a fuel cell (2) and oxygen is fed to a cathode (2.2) of said fuel cell (2) and anode exhaust is recirculated to the anode (2.1) of the fuel cell (2),
**characterized in that** a small amount of the anode exhaust is continuously bleeding from the anode exhaust.

7. A method according to Claim 6,
**characterized in that** the small amount of exhaust bled from the recirculated anode exhaust is burnt in a catalytic reactor (12).

8. A method according to Claim 7,
**characterized in that** oxygen for catalytic burning the exhaust bled from the recirculated anode exhaust is supplied from the cathode exhaust.

9. A method according to Claim 8,
**characterized in that** the amount of oxygen is established in a way that the hydrogen content in the reactor is equal or below 50% of the low inflammability limit.
